# EUROPÄISCHE PATENTSCHRIFT

(11) **EP 2 923 541 B1**
(45) Veröffentlichungstag und Bekanntmachung des Hinweises auf die Patenterteilung: **13.02.2019**
(21) Anmeldenummer: 15160079.8
(22) Anmeldetag: 20.03.2015
(51) Int. Cl.: A01B 71/06

(54) **LANDWIRTSCHAFTLICHES ANBAUGERÄT**
AGRICULTURAL CULTIVATION DEVICE
OUTIL PORTÉ AGRICOLE

(30) Priorität: 28.03.2014 DE 102014004571
(43) Veröffentlichungstag der Anmeldung: 30.09.2015
(73) Patentinhaber: PÖTTINGER Landtechnik GmbH, 4710 Grieskirchen (AT)
(72) Erfinder: Gadermayr, Andreas, 4751 Dorf a. d. Pram (AT); Greifeneder, August, 4707 Schlüßlberg (AT); Lehner, Josef, 4732 St. Thomas (AT)
(74) Vertreter: Thoma, Michael

(56) Entgegenhaltungen:
- EP-A1- 1 769 666
- DE-B- 1 232 388

## Beschreibung

Die vorliegende Erfindung betrifft ein landwirtschaftliches Anbaugerät zum Anbau an einen Schlepper, mit Arbeitsaggregaten, die mittels eines mechanischen Antriebsstrangs von einer Schlepperzapfwelle her antreibbar sind, wobei der genannte Antriebsstrang ein Verteilergetriebe mit zumindest zwei zu verschiedenen Seiten gehenden Ausgangswellen umfasst, an die Gelenkwellen zum Antreiben von zumindest zwei Arbeitsaggregaten anschließbar sind. Ein solches Anbaugerät kann insbesondere ein Mähwerk oder auch eine Heuwerbungsmaschine in Form eines Schwaders oder Zetters sein.

Die Arbeitsaggregate derartiger Anbaugeräte können vorteilhafterweise zwischen einer abgesenkten Arbeitsstellung und einer ausgehobenen Vorgewende- und/oder Transportstellung angehoben bzw. abgesenkt werden, wobei seitlich auskragende Arbeitsaggregate gerne um eine liegende Achse nach oben geklappt oder um eine aufrechte Achse nach hinten bzw. vorne geklappt werden können, um in der Transportstellung eine geringere Maschinenbreite realisieren zu können.

Bei derartigen verschwenkbaren bzw. verklappbaren Arbeitsaggregaten müssen die Gelenkwellen, die die Arbeitsaggregate mit dem Verteilergetriebe verbinden bzw. zumindest einen Teil der Antriebsstrangäste zwischen Verteilergetriebe und Arbeitsaggregaten bilden, die Schwenkbewegung der Arbeitsaggregate relativ zum Verteilergetriebe ausgleichen bzw. ermöglichen, ohne abgebaut werden zu müssen. Hierbei ist einerseits der entsprechende Winkelversatz, der durch die Schwenkbewegung des Arbeitsaggregats eintritt, auszugleichen, was beispielsweise bei einer zumindest etwa 90°-Schwenkbewegung nicht ganz einfach ist. Zum anderen muss auch eine Abstandsveränderung zwischen den Ausgangswellen des Verteilergetriebes und den Anschlusswellenstummeln an den Arbeitsaggregaten von der Gelenkwelle ausgeglichen werden, da die Schwenkachsen für die Schwenkbewegung der Arbeitsaggregate regelmäßig nicht unmittelbar durch die Ausgangswellen des Verteilergetriebes bzw. die genannten Anschlusswellenstummel der Arbeitsaggregate gehen.

Die genannte Problematik des Längenausgleichs durch die Gelenkwellen, die von dem Verteilergetriebe abgehen, stellt sich noch in verschärfter Form dann, wenn die Arbeitsaggregate verschiebbar angeordnet bzw. gelagert sind, wie dies beispielsweise bei Kreiselschwadern bekannt ist, bei denen die Kreiselschwader an teleskopierbaren bzw. längsverschiebbaren Querrahmenteilen gelagert sind, um die Schwadablage steuern zu können. In ähnlicher Weise können auch Mähwerke quer zur Spur verschieblich sein, beispielsweise um bei Kurvenfahrten eine ausreichende Überdeckung zwischen frontseitig und heckseitig angeordneten Mähwerkseinheiten zu ermöglichen.

Um bei relativ kurzen Gelenkwellen relativ große Abstandsveränderungen kompensieren zu können, wurde bereits vorgeschlagen, mehrfach teleskopierbare Gelenkwellen zu verwenden, die mehrere telekopartig ineinander schiebbare Wellenstücke umfassen. Solche mehrfach teleskopierbaren Gelenkwellen sind jedoch teuer und nur begrenzt robust.

Ein landwirtschaftliches Anbaugerät in Form einer Heuwerbungsmaschine mit einem Verteilergetriebe, von dem jeweils quer Antriebswellen abgehen, ist aus der Schrift DE 195 35 304 A1 bekannt.

Aus der DE-A-1 232 388 ist ferner eine Heuwerbungsmaschine bekannt, bei der mehrere Rechkreisel sternförmig an ein zentrales Verteilergetriebe angeschlossen sind, wobei in den sternförmig angeordneten Rechkreiselträgern Antriebswellen vorgesehen sind, die an das Zentralgetriebe angeschlossen sind.

Der vorliegenden Erfindung liegt die Aufgabe zugrunde, ein verbessertes landwirtschaftliches Anbaugerät der eingangs genannten Art zu schaffen, das Nachteile des Standes der Technik vermeidet und Letzteren in vorteilhafter Weise weiterbildet. Insbesondere soll mit einer einfachen Verteilergetriebe- und Gelenkwellenanordnung eine große Verstellbarkeit der Arbeitsaggregate ermöglicht werden.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, die Ausgangswellen des Verteilergetriebes so zu positionieren, dass die davon abgehenden Gelenkwellen eine größere Länge erhalten. Der Abstand der Ausgangswellen des Verteilergetriebes von den Wellenanschlussstücken an den Antriebsaggregaten bzw. den aggregatseitigen Antriebsstrangstücken wird vergrößert, um durch die entsprechend vergrößerte Gelenkwellenlänge auch mit nur einfach teleskopierbaren Gelenkwellen eine große Längenverstellbarkeit zu erreichen und damit einen entsprechend großen Längenausgleich zu ermöglichen, der Seitenverschiebungen, Bodenanpassbewegungen oder größere Bewegungen in die Transportstellung weniger beschränkt. Erfindungsgemäß sind die Ausgangswellen des Verteilergetriebes außer Flucht zueinander angeordnet und die Gelenkwellen zueinander verschränkt an die Ausgangswellen anschließbar. Die zu verschiedenen Seiten abgehenden Ausgangswellen des Verteilergetriebes ermöglichen es, durch ihre versetzte bzw. asymmetrische Anordnung, die Gelenkwellen sozusagen verkehrt herum anzuschließen, so dass sich die Gelenkwellen überlappen bzw. windschief überkreuzen bzw. ein Stück weit überdecken und hierdurch eine größere Länge erhalten. Durch diese größere Länge der Gelenkwellen können diese auch bei einfacherem Aufbau einen größeren Längenausgleich bewerkstelligen.

" Dabei sind die zumindest zwei Arbeitsaggregate auf gegenüberliegenden Seiten des Verteilergetriebes angeordnet, so dass die Gelenkwellen zu gegenüberliegenden Seiten vom Verteilergetriebe abgehen. Die Gelenkwellen sind dabei aber nicht an den jeweils näher beim zugehörigen Arbeitsaggregat liegenden Ausgangswellen des Verteilergetriebes angeschlossen, sondern an die jeweils weiter beabstandete Ausgangswelle.

Insbesondere kann in Fahrtrichtung betrachtet ein Arbeitsaggregat links von dem Verteilergetriebe und ein weiteres Arbeitsaggregat rechts vom Verteilergetriebe angeordnet sein. In Weiterbildung der Erfindung ist dabei die zum rechten Arbeitsaggregat gehende Gelenkwelle an eine auf der linken Seite des Verteilergetriebes liegende Ausgangswelle angeschlossen, während die zum linken Arbeitsaggregat gehende Gelenkwelle an eine auf der rechten Seite des Verteilergetriebes liegende Ausgangswelle angeschlossen ist. Mit anderen Worten wird das linke Arbeitsaggregat an die rechte Ausgangswelle und das rechte Arbeitsaggregat an die linke Ausgangswelle des Verteilergetriebes angeschlossen, um die gewünschte Gelenkwellenverlängerung zu erreichen. Um dabei eine Kollision der Gelenkwellen zu vermeiden, sind die Ausgangswelle des Verteilergetriebes, die zu verschiedenen Seiten hin vom Verteilergetriebe abgehen, zueinander nicht fluchtend angeordnet bzw. zueinander quer versetzt, so dass die Gelenkwellen aneinander vorbeilaufen können.

Bei Betrachtung in Fahrtrichtung und/oder in Richtung der Eingangswelle des Verteilergetriebes können die beiden Gelenkwellen insbesondere in einer X-Anordnung zueinander an die beiden Ausgangswellen des Verteilergetriebes anschließbar sein, wobei die genannte X-Anordnung der Gelenkwellen zumindest dann gegeben sein kann, wenn sich die Arbeitsaggregate in ihrer abgesenkten Arbeitsstellung befinden und/oder in ihrer ausgehobenen Transportstellung befinden.

In Weiterbildung der Erfindung kann das Verteilergetriebe derart beschaffen sein, dass sich die Ausgangswellen des Verteilergetriebes jeweils von einer Getriebeaußenseite nach innen vorspringend erstrecken und/oder aufeinander zu erstrecken. Insbesondere können die Getriebeausgangswellen quer zu einer Längsmittelebene durch das Verteilergetriebe nach innen auf die genannte Längsmittelebene hin vorspringen. Insbesondere können die freien Enden der genannten Ausgangswellen der gemeinsamen Längsmittelebene zugewandt sein. Die genannte Längsmittelebene durch das Verteilergetriebe kann insbesondere eine aufrechte Hauptebene des Verteilergetriebes sein, die sich parallel zur Getriebeeingangswelle bzw. durch die Getriebeeingangswelle hindurch erstrecken kann.

In Weiterbildung der Erfindung kann das Verteilergetriebe von einem Hauptkorpus auskragende Getriebearme umfassen, von denen die genannten Ausgangswellen, an die die Gelenkwellen anschließbar sind, abgehen können bzw. vorspringen können. Die Ausgangswellen können sich hierbei insbesondere quer zur Längserstreckung der genannten Getriebearme erstrecken und/oder im Bereich des freien, auskragenden Endes der genannten Getriebearme angeordnet sein.

In vorteilhafter Weiterbildung der Erfindung können sich die genannten Getriebearme auf gegenüberliegenden Getriebeseiten erstrecken.

Um den gewünschten Versatz der Ausgangswellen bzw. die gewünschte Verschränkung der daran anschließbaren Gelenkwellen zu ermöglichen, können die vorgenannten Getriebearme in Weiterbildung der Erfindung zueinander verschränkt und/oder verkippt ausgerichtet sein. Beispielsweise können die Getriebearme sich wie die Zeiger einer Uhr zu verschiedenen Uhrzeiten hin erstrecken, beispielsweise ein Getriebearm etwa zu 8 Uhr hin und der andere Getriebearm zu 4 Uhr hin.

Insbesondere können sich die genannten Getriebearme bei Betrachtung des Verteilergetriebes quer zur Getriebeeingangswelle und/oder Betrachtung parallel zur Längsrichtung der Ausgangswellen in einer zueinander winkeligen bzw. verdrehten oder verkippten Anordnung befinden.

Die Ausgangswellen des Verteilergetriebes können dabei grundsätzlich verschiedene Ausrichtungen zueinander einnehmen. Beispielsweise können die Ausgangswellen zueinander leicht windschief angeordnet sein, insbesondere auf das jeweilige Arbeitsaggregat zugewandt ausgerichtet sein, so dass sich je nach Anordnung der Arbeitsaggregate relativ zum Verteilergetriebe verschiedene Winkelstellungen der Ausgangswellen zueinander ergeben können. Um eine einfache Gestaltung des Verteilergetriebes zu ermöglichen, können die Ausgangswellen sich zueinander parallel erstrecken. Insbesondere können die genannten Ausgangswellen sich jeweils senkrecht zur vorgenannten Längsmittelebene des Verteilergetriebes erstrecken und/oder jeweils quer zur Längsrichtung der Getriebeeingangswelle des Verteilergetriebes ausgerichtet sein.

Das Verteilergetriebe kann in Weiterbildung der Erfindung vorteilhafterweise etwa mittig zwischen den beiden Arbeitsaggregaten des Anbaugeräts angeordnet sein, wobei sich die beiden Arbeitsaggregate in Fahrtrichtung betrachtet etwa auf Höhe des Verteilergetriebes erstrecken können. Alternativ kann in Fahrtrichtung betrachtet aber auch ein gewisser Versatz zwischen der Position der Arbeitsaggregate und der Position des Verteilergetriebes vorgesehen sein.

Das Verteilergetriebe kann zusätzlich zu den beiden genannten zu verschiedenen Seiten hin abgehenden Antriebswellen noch zumindest eine weitere zusätzliche Ausgangswelle umfassen, beispielsweise um zusätzlich zu den beiden seitlichen Arbeitsaggregaten auch noch ein weiteres Arbeitsaggregat anzutreiben, das in Fahrtrichtung versetzt angeordnet sein kann.

Gemäß einer beispielhaften, vorteilhaften Ausführung der Erfindung kann das Verteilergetriebe eine näherungsweise in Fahrtrichtung weisende Getriebeeingangswelle sowie die vorgenannten, zumindest zwei Ausgangswellen umfassen, die sich vorteilhafterweise quer zur Fahrtrichtung liegend erstrecken können. Eine weitere, dritte Ausgangswelle kann ebenfalls in Fahrtrichtung ausgerichtet sein und sich dabei zur der Eingangswelle gegenüberliegenden Seite des Verteilergetriebes hin erstrecken.

In vorteilhafter Weiterbildung der Erfindung können die von den Ausgangswellen abgehenden Gelenkwellen jeweils nur einfach teleskopierbar ausgebildet sein. Durch die größere Länge der Gelenkwellen infolge der versetzten Anordnung der Getriebeausgangswellen kann auch bei nur einfacher Teleskopierbarkeit ein ausreichender Längenausgleich erzielt werden. Gleichzeitig besitzt eine solche Gelenkwelle bei einfacher Herstellbarkeit eine große Robustheit.

Die genannte Getriebe- bzw. Gelenkwellenanordnung kann in vorteilhafter Weiterbildung der Erfindung bei verschiedenen landwirtschaftlichen Anbaugeräten eingesetzt sein, wobei sich besondere Vorteile beim Einsatz an einer Mähmaschine oder einer Heuwerbungsmaschine zeigen, die als Schwader oder auch als Zetter ausgebildet sein kann.

Insbesondere vorteilhaft ist die genannte Getriebe- bzw. Gelenkwellenanordnung dann, wenn die Arbeitsaggregate des Anbaugeräts verschiebbar aufgehängt und/oder aus einer Arbeitsstellung in eine Vorgewende- bzw. Transportstellung klappbar angeordnet sind.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, perspektivische Darstellung eines landwirtschaftlichen Anbaugeräts in Form eines Mähwerks mit seitlich rechts und links angeordneten Mähwerkseinheiten, die über Gelenkwellen von einem zentralen Verteilergetriebe her antreibbar sind,
- Fig. 2:: eine perspektivische Darstellung des Verteilergetriebes aus Fig. 1, die die asymmetrische Anordnung der quer abgehenden Ausgangswellen des Verteilergetriebes zeigt,
- Fig. 3:: eine Seitenansicht des Verteilergetriebes aus den vorhergehenden Figuren in einer Blickrichtung senkrecht zur Eingangswelle des Getriebes, die die zueinander verkippte Anordnung zweier seitlicher Getriebearme zeigt, von denen die Getriebeausgangswellen abgehen, und
- Fig. 4:: eine Draufsicht auf das Verteilergetriebe aus den vorhergehenden Figuren in einer Blickrichtung parallel zur Längsachse der Getriebeeingangswelle, die die von einer Getriebeaußenseite her nach innen vorspringende Anordnung der Ausgangswellen des Verteilergetriebes zeigt.

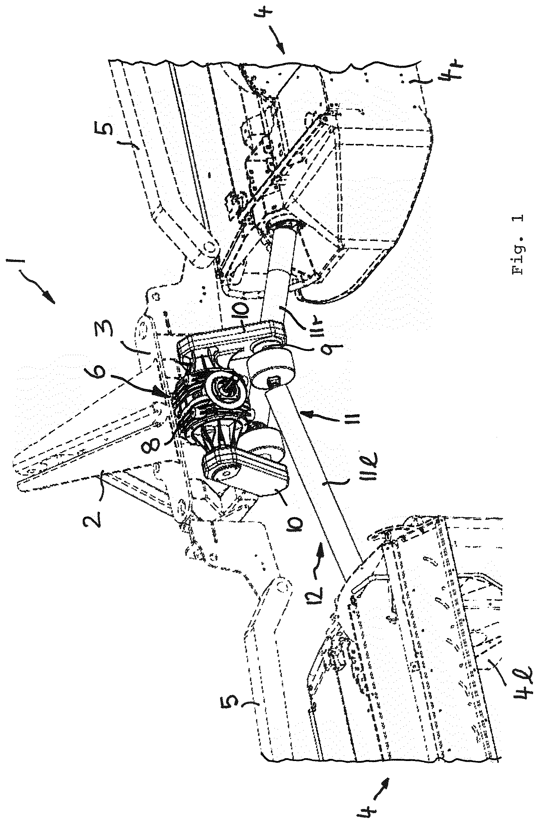

Wie Fig. 1 zeigt, kann das Anbaugerät 1 eine Anbauvorrichtung zum Anbau an einen nicht dargestellten Schlepper umfassen, wobei die genannte Anbauvorrichtung beispielsweise einen Anbaubock 2 umfassen kann, der mittels einer an sich bekannten Ober- und Unterlenkeranordnung bzw. Dreipunktanlenkung an den Schlepper angebaut werden kann.

Mit der genannten Anbauvorrichtung ist ein Rahmenteil 3 verbunden, an dem mehrere Arbeitsaggregate 4 angelenkt bzw. daran aufgehängt sein können. Beispielsweise können von dem genannten zentralen Rahmenteil 3 Tragarme 5 abgehen, an denen jeweils ein Arbeitsaggregat 4 befestigt ist. Die genannten Tragarme 5 können insbesondere seitlich quer zur Fahrtrichtung vom Rahmenteil 3 auskragen, um ein linkes und ein rechtes Arbeitsaggregat 4 beispielsweise in Form jeweils einer Mähwerkseinheit zu tragen.

Die genannten Tragarme 5 können um liegende Schwenkachsen nach oben geschwenkt werden, um die Arbeitsaggregate 4 aus der in Fig. 1 gezeigten abgesenkten Arbeitsstellung in eine ausgehobene Vorgewendestellung und/oder in eine im Wesentlichen aufrechte Transportstellung nach oben schwenken zu können. Alternativ oder zusätzlich können die genannten Tragarme 5 um aufrechte Schwenkachsen nach hinten geklappt werden, beispielsweise um einen Anfahrschutz zu realisieren und/oder die Arbeitsaggregate in eine Transportstellung nach hinten klappen zu können.

An dem zentralen Rahmenteil 3 oder einem damit verbundenen Rahmenteil kann ein Verteilergetriebe 6 beispielsweise ortsfest gelagert sein, das vorteilhafterweise zwischen den beiden Arbeitsaggregaten 4 angeordnet sein kann und/oder in einer zentralen Position am oder in Fahrtrichtung hinter dem Anbaubock 2 befinden kann.

Das genannte Verteilergetriebe 6 umfasst dabei vorteilhafterweise eine sich zum Schlepper hin vorspringend erstreckende Eingangswelle 7, die sich in der Darstellung der Fig. 1 in die Zeichenebene hinein erstreckt bzw. vom Getriebekorpus 8 verdeckt ist. Die genannte Eingangswelle 7 kann direkt oder ggf. unter Zwischenschaltung weiterer Getriebestufen an eine Zapfwelle des Schleppers angeschlossen werden, um die rotatorische Antriebsbewegung des Schleppers abzugreifen.

Um die Arbeitsaggregate 4 antreiben zu können, umfasst das Verteilergetriebe 6 zwei quer zur Eingangswelle 7 abgehende Ausgangswellen 9, von denen eine dem einen Arbeitsaggregat und die andere dem anderen Arbeitsaggregat zugewandt ist. Wie die Figuren 1 zeigt, sind die seitlich abgehenden Ausgangswellen 9 asymmetrisch angeordnet und fluchten nicht miteinander, obwohl sie sich parallel zueinander erstrecken. Insbesondere können die genannten Ausgangswellen 9 jeweils liegend quer zur Fahrtrichtung ausgerichtet sein und/oder sich senkrecht zu einer aufrechten Längsmittelebene erstrecken, die durch die Eingangswelle 7 geht.

Das Verteilergetriebe 6 kann zwei an gegenüberliegenden Getriebeseiten angeordnete Getriebearme 10 umfassen, die vom zentralen Getriebekorpus 8 auskragend ausgebildet sind und beispielsweise eine Kettenstufe oder eine Getrieberadstufe umfassen können. An den auskragenden Enden der genannten Getriebearme 10 sind die vorgenannten Ausgangswellen 9 vorgesehen, wobei die Ausgangswellen 9 quer zur Längserstreckung der Getriebearme 10 auskragen.

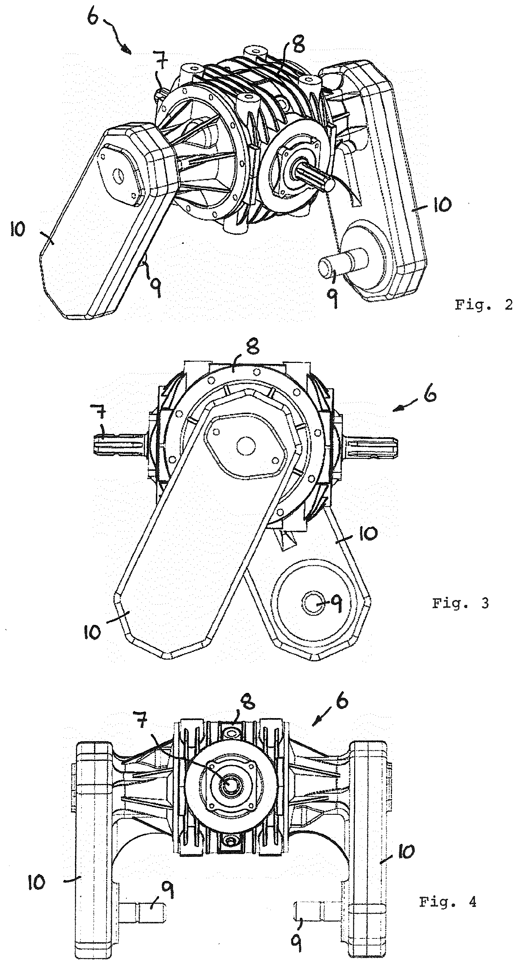

Wie insbesondere Fig. 3 zeigt, sind die Getriebearme 10 zueinander verschränkt bzw. verkippt angeordnet, so dass sie bei Betrachtung parallel zu den Ausgangswellen 9 und/oder senkrecht zur Eingangswelle 7 einen spitzen Winkel zwischen sich einschließen, beispielsweise im Bereich von 15° bis 80°, vorzugsweise zwischen 20° und 45°.

Die Ausgangswellen 9 können dabei von den genannten Getriebearmen 10 nach innen vorspringen, vgl. Fig. 4.

Wie Fig. 1 zeigt, kann ein linkes Arbeitsaggregat 4 über eine Gelenkwelle 11 mit der rechten Ausgangswelle 9 des Verteilergetriebes 6 und ein rechtes Arbeitsaggregat 4 über eine entsprechende Gelenkwelle 11 mit der linken Ausgangswelle 9 des Verteilergetriebes 6 verbunden sein, so dass sich die beiden Gelenkwellen 11 in einer näherungsweise X-Anordnung zueinander erstrecken, zumindest wenn die Arbeitsaggregate 6 sich in der Arbeitsstellung befinden, bzw. zueinander verschränkt und/oder überlappend angeordnet sind. Insbesondere können sich die Gelenkwellen 11 bei Betrachtung in einer Blickrichtung parallel zur Getriebeeingangswelle 7 überlappen. Die linke Gelenkwelle 11 erstreckt sich über die linke Ausgangswelle 9 hinaus auf die rechte Seite des Verteilergetriebes, während sich die rechte Gelenkwelle 11 über die rechte Ausgangswelle 9 hinaus auf die linke Seite des Verteilergetriebes 6 erstreckt.

Die Ausgangswellen 9 können dabei vorteilhafterweise einen Höhenversatz zur Eingangswelle 7 aufweisen, vgl. beispielsweise Fig. 3 und Fig. 4.

## Patentansprüche

1. Landwirtschaftliches Anbaugerät zum Anbau an einen Schlepper, mit Arbeitsaggregaten (4), die mittels eines mechanischen Antriebsstrangs (12) von einer Schlepperzapfwelle her antreibbar sind, wobei der genannte mechanische Antriebsstrang (12) ein Verteilergetriebe (6) mit zumindest zwei zu verschiedenen Seiten gehenden Ausgangswellen (9) umfasst, an die Gelenkwellen (11) zum Antreiben von zumindest zwei Arbeitsaggregaten (4) anschließbar sind, wobei die Ausgangswellen (9) außer Flucht zueinander angeordnet und die Gelenkwellen zueinander verschränkt an die Ausgangswellen (9) anschließbar sind, **dadurch gekennzeichnet, dass** die zumindest zwei Arbeitsaggregate (4) auf gegenüberliegenden Seiten des Verteilergetriebes (6) angeordnet sind, wobei ein erstes Arbeitsaggregat (4L) mittels einer ersten Gelenkwelle (11L) an eine erste Ausgangswelle (9R) angeschlossen ist, die näher zu dem zweiten Arbeitsaggregat (4R) als zum ersten Arbeitsaggregat (4L) angeordnet ist, und das zweite Arbeitsaggregat (4R) mittels einer zweiten Gelenkwelle (11R) an einer zweiten Ausgangswelle (9L) angeschlossen ist, die näher zum ersten Arbeitsaggregat (4L) als zum zweiten Arbeitsaggregat (4R) angeordnet ist.

2. Landwirtschaftliches Anbaugerät nach dem vorhergehenden Anspruch, wobei das erste Arbeitsaggregat (4L) auf einer in Fahrtrichtung betrachtet linken Seite des Anbaugeräts angeordnet ist und mittels der ersten Gelenkwelle (11L) mit der auf der rechten Seite des Verteilergetriebes (6) angeordneten Ausgangswelle (9R) verbunden ist, und das zweite Arbeitsaggregat auf einer in Fahrtrichtung betrachtet rechten Seite des Anbaugeräts angeordnet ist und mit der genannten zweiten Gelenkwelle (11R) mit der auf der linken Seite des Verteilergetriebes (6) angeordneten Ausgangswelle (9L) verbunden ist.

3. Landwirtschaftliches Anbaugerät nach einem der vorhergehenden Ansprüche, wobei die beiden Ausgangswellen (9) jeweils von einer Getriebeaußenseite nach innen vorspringen und/oder sich aufeinander zu erstrecken.

4. Landwirtschaftliches Anbaugerät nach einem der vorhergehenden Ansprüche, wobei die Ausgangswellen (9) von Getriebearmen (10) abgehen, die sich auf gegenüberliegenden Getriebeseiten erstrecken und von einem zentralen Getriebekorpus (8) auskragen, wobei die beiden Getriebearme (10) zueinander verschränkt und/oder verkippt angeordnet sind.

5. Landwirtschaftliches Anbaugerät nach einem der vorhergehenden Ansprüche, wobei die Ausgangswellen (9) sich jeweils quer zu einer Eingangswelle (7) des Verteilergetriebes erstrecken, insbesondere quer zur Fahrtrichtung liegend ausgerichtet sind.

6. Landwirtschaftliches Anbaugerät nach einem der vorhergehenden Ansprüche, wobei sich die Ausgangswellen (9) im Wesentlichen senkrecht zu einer aufrechten Längsmittelebene des Verteilergetriebes (6) erstrecken und mit ihren Stirnseiten der genannten Längsmittelebene zugewandt sind.

7. Landwirtschaftliches Anbaugerät nach einem der vorhergehenden Ansprüche, wobei die Gelenkwellen (11) in Fahrtrichtung und/oder in Richtung einer Eingangswelle (7) des Verteilergetriebes (6) betrachtet in einer X-Anordnung zueinander an die Ausgangswellen (9) angeschlossen sind.

8. Landwirtschaftliches Anbaugerät nach einem der vorhergehenden Ansprüche, wobei die Arbeitsaggregate (4) zwischen einer abgesenkten Arbeitsstellung und einer angehobenen Transport- und/oder Vorgewendestellung bewegbar gelagert, insbesondere klappbar angeordnet sind.

9. Landwirtschaftliches Anbaugerät nach einem der vorhergehenden Ansprüche, wobei die Arbeitsaggregate (4) quer zur Fahrtrichtung verschiebbar und/oder vom Verteilergetriebe (6) weg und auf das Verteilergetriebe (7) zu verschieblich gelagert sind.

10. Landwirtschaftliches Anbaugerät nach einem der vorhergehenden Ansprüche, wobei die Gelenkwellen (11) jeweils einfach teleskopierbar ausgebildet sind.

11. Landwirtschaftliches Anbaugerät nach einem der vorhergehenden Ansprüche, wobei das Anbaugerät als Mähwerk ausgebildet ist und die Arbeitsaggregate (4) Mähwerkseinheiten umfassen.

12. Landwirtschaftliches Anbaugerät nach einem der Ansprüche 1-10, wobei das Anbaugerät als Heuwerbungsmaschine, insbesondere Zetter oder Schwader, ausgebildet ist und die Arbeitsaggregate (4) Rechkreisel umfassen.

## Claims

1. An agricultural attachment item for attachment to a tractor having work units (4) that are drivable by means of a mechanical drive train (12) from a tractor power take-off shaft, wherein said mechanical drive train (12) comprises a transfer case (6) having at least two output shafts (9) which go to different sides and to which cardan shafts (11) are connectable to drive at least two work units (4), with the output shafts (9) being arranged out of alignment with one another and the cardan shafts being connectable to the output shafts (9) in an interlocked manner with one another, **characterized in that** the at least two work units (4) are arranged at oppositely disposed sides of the transfer case (6), with a first work unit (4L) being connected by means of a first cardan shaft (11L) to a first output shaft (9R) that is arranged closer to the second work unit (4R) than to the first work unit (4L) and with the second work unit (4R) being connected by means of a second cardan shaft (11R) to a second output shaft (9L) that is arranged closer to the first work unit (4L) than to the second work unit (4R).

2. An agricultural attachment item in accordance with the preceding claim, wherein the first work unit (4L) is arranged at a left side of the attachment item viewed in the direction of travel and is connected by means of the first cardan shaft (11L) to the output shaft (9R) arranged at the right side of the transfer case (6) and the second work unit is arranged at a right side of the attachment item viewed in the direction of travel and is connected with said second cardan shaft (11R) to the output shaft (9L) arranged at the left side of the transfer case (6).

3. An agricultural attachment item in accordance with one of the preceding claims, wherein the two output shafts (9) each project inwardly from an outer transmission side and/or extend toward one another.

4. An agricultural attachment item in accordance with one of the preceding claims, wherein the output shafts (9) start from transmission arms (10) that extend on oppositely disposed transmission sides and project from a central transmission body (8), with the two transmission arms (10) being arranged interlocked and/or tilted with respect to one another.

5. An agricultural attachment item in accordance with one of the preceding claims, wherein the output shafts (9) each extend transversely to an input shaft (7) of the transfer case, and are in particular aligned horizontally transversely to the direction of travel.

6. An agricultural attachment item in accordance with one of the preceding claims, wherein the output shafts (9) extend substantially perpendicular to an upright central longitudinal plane of the transfer case (6) and their front sides face said central longitudinal plane.

7. An agricultural attachment item in accordance with one of the preceding claims, wherein the cardan shafts (11) are connected to the output shafts (9) in an X arrangement viewed in the direction of travel and/or in the direction of an input shaft (7) of the transfer case (6).

8. An agricultural attachment item in accordance with one of the preceding claims, wherein the work units (4) are movably supported, in particular foldably arranged, between a lowered working position and a raised transport position and/or headland position.

9. An agricultural attachment item in accordance with one of the preceding claims, wherein the work units (4) are displaceable transversely to the direction of travel and/or are displaceably supported away from the transfer case (6) and toward the transfer case (7).

10. An agricultural attachment item in accordance with one of the preceding claims, wherein the cardan shafts (11) can each be telescoped once.

11. An agricultural attachment item in accordance with one of the preceding claims, wherein the attachment item is configured as a mower and the work units (4) comprise mower units.

12. An agricultural attachment item in accordance with one of the claims 1 to 10, wherein the attachment item is configured as a hay-making machine, in particular as a tedder or swather; and wherein the work units (4) comprise rotary rakes.

## Revendications

1. Outil porté agricole destiné à être monté sur un tracteur, comprenant des organes de travail (4), qui peuvent être entraînés à partir d'un arbre de prise de force de tracteur au moyen d'un train d'entraînement mécanique (12), ledit train d'entraînement mécanique (12) comprenant une transmission de prise de force (6) dotée d'au moins deux arbres de sortie (9) partant de différents côtés, auxquels des arbres articulés (11) peuvent être reliés pour l'entraînement d'au moins deux organes de travail (4), les arbres de sortie (9) étant disposés décalés l'un par rapport à l'autre et les arbres articulés pouvant être reliés aux arbres de sortie (9) de manière entrecroisée,
**caractérisé en ce que**
les au moins deux organes de travail (4) sont disposés sur des côtés opposés de la transmission de prise de force (6), un premier organe de travail (4L) étant relié au moyen d'un premier arbre articulé (11L) à un premier arbre de sortie (9R), qui est disposé plus près du second organe de travail (4R) que du premier organe de travail (4L), et le second organe de travail (4R) étant relié au moyen d'un second arbre articulé (11R) à un second arbre de sortie (9L), qui est disposé plus près du premier organe de travail (4L) que du second organe de travail (4R).

2. Outil porté agricole selon la revendication précédente, dans lequel le premier organe de travail (4L) est disposé sur un côté gauche, vu dans le sens de la marche, de l'outil porté et est relié à l'arbre de sortie (9R) disposé sur le côté droit de la transmission de prise de force (6) au moyen du premier arbre articulé (11L), et le second organe de travail est disposé sur un côté droit, vu dans le sens de la marche, de l'outil porté et est relié à l'arbre de sortie (9L) disposé sur le côté gauche de la transmission de prise de force (6) au moyen dudit second arbre articulé (11R).

3. Outil porté agricole selon l'une des revendications précédentes, dans lequel les deux arbres de sortie (9) font saillie respectivement vers l'intérieur depuis un côté extérieur de la transmission et/ou s'étendent l'un vers l'autre.

4. Outil porté agricole selon l'une des revendications précédentes, dans lequel les arbres de sortie (9) partent de bras de transmission (10), qui s'étendent sur des côtés opposés de la transmission et font saillie depuis un corps de transmission central (8), les deux bras de transmission (10) étant disposés entrecroisés et/ou inclinés l'un par rapport à l'autre.

5. Outil porté agricole selon l'une des revendications précédentes, dans lequel les arbres de sortie (9) s'étendent respectivement transversalement à un arbre d'entrée (7) de la transmission de prise de force, et sont en particulier orientés horizontalement de manière transversale au sens de la marche.

6. Outil porté agricole selon l'une des revendications précédentes, dans lequel les arbres de sortie (9) s'étendent sensiblement perpendiculairement à un plan médian longitudinal vertical de la transmission de prise de force (6) et sont orientés avec leur face frontale en direction dudit plan médian longitudinal.

7. Outil porté agricole selon l'une des revendications précédentes, dans lequel les arbres articulés (11) sont reliés aux arbres de sortie (9) dans une disposition en X l'un par rapport à l'autre, vus dans le sens de la marche et/ou dans le sens d'un arbre d'entrée (7) de la transmission de prise de force (6).

8. Outil porté agricole selon l'une des revendications précédentes, dans lequel les organes de travail (4) sont disposés montés mobiles, en particulier rabattables, entre une position de travail descendue et une position de transport et/ou de tournière relevée.

9. Outil porté agricole selon l'une des revendications précédentes, dans lequel les organes de travail (4) sont montés déplaçables transversalement au sens de la marche et/ou déplaçables s'éloignant de la transmission de prise de force (6) et en direction de la transmission de prise de force (7).

10. Outil porté agricole selon l'une des revendications précédentes, dans lequel les arbres articulés (11) sont réalisés respectivement télescopiques une fois.

11. Outil porté agricole selon l'une des revendications précédentes, dans lequel l'outil porté se présente sous la forme d'une faucheuse et les organes de travail (4) comprennent des unités de faucheuse.

12. Outil porté agricole selon l'une des revendications 1 à 10, dans lequel l'outil porté se présente sous la forme d'une faneuse, en particulier d'un épandeur-faneur ou d'une andaineuse, et les organes de travail (4) comprennent des toupies de ratissage.
